# EUROPEAN PATENT SPECIFICATION

(11) **EP 2 938 756 B1**
(45) Date of publication and mention of the grant of the patent: **06.09.2017**
(21) Application number: 13824019.7
(22) Date of filing: 10.12.2013
(51) Int. Cl.: C02F 1/66, C25B 11/04, C25B 15/02

(54) **APPARATUS INCLUDING A PH ADJUSTOR**
VORRICHTUNG MIT PH-WERT-EINSTELLUNGSVORRICHTUNG
APPAREIL COMPRENANT UN DISPOSITIF D'AJUSTEMENT DU PH

(30) Priority: 26.12.2012 WO PCT/CN2012/087571; 26.06.2013 WO PCT/CN2013/078060
(43) Date of publication of application: 04.11.2015
(73) Proprietor: Koninklijke Philips N.V., 5656 AE Eindhoven (NL)
(72) Inventor: YANG, Miaoxin, NL-5656 AE Eindhoven (NL); WANG, Guangwei, NL-5656 AE Eindhoven (NL); JIN, Jianyu, NL-5656AE Eindhoven (NL)
(74) Representative: Freeke, Arnold
(86) International application number: PCT/IB2013/060764
(87) International publication number: WO 2014/102636

(56) References cited:
- WO-A1-2012/166434
- DE-A1- 10 218 193
- US-A1- 2009 114 598
- US-A1- 2011 042 206
- US-A1- 2012 241 383

## Description

### FIELD OF THE INVENTION

The invention generally relates to domestic water property adjustment, especially to a pH adjustor and a home appliance including the pH adjustor.

### BACKGROUND OF THE INVENTION

During the past decades, intensive researches have been carried out to find a facile but controllable method to adjust a pH value of water. Commonly used methods of water pH adjustment are basically classified into three categories: chemical additives based, ion exchange (IEX) resins based and electrolysis based. By using either of the first two methods, users need to frequently replace the chemical additives or resins due to the low capacity and are not able to precisely control the pH value. The electrolysis based method applies electricity to decompose water into O₂ and H₂, leaving OH⁻ and H⁺ in the water, thus changing the pH value, see expressions (1) and (2).

2H⁺+2e⁻→H₂ (Cathode) (1)

4OH⁻- 4e⁻→2H₂O+ O₂ (Anode) (2)

The major problem faced by the electrolysis based method is by-products, e.g., waste water. For example, although a user wants acidic water of a certain amount only, the same amount of alkaline water will be produced, and vice versa.

### SUMMARY OF THE INVENTION

It would be, therefore, advantageous to provide a new pH adjustor and method for pH adjustment of electrolyte aqueous solution, such as water, which is capable of unidirectional pH adjustment without producing waste water.

Furthermore, it would be advantageous if the pH adjustor is refreshable so as to relief users from inconvenient maintenance.

Furthermore, it would be advantageous if the pH adjustor can process as much water as possible before refreshment is needed.

Furthermore, it would be advantageous if the pH adjustor can be used for not only reducing or increasing pH value of water but in both ways.

According to the invention there is provided a device according to claim 1, which comprises a second unit configured to dispense pH-adjusted electrolyte aqueous solution, and a pH adjustor configured to adjust pH value of electrolyte aqueous solution is described, the pH adjustor comprises an electrolysis cell including an anode and a cathode: the cathode comprising pseudocapacitance material, in operation of the pH adjustor, the pseudocapacitance material gets electrons from the anode and adsorbs cations from the electrolyte aqueous solution by electrochemically reacting with said cations, OH- in the electrolyte aqueous solution are consumed by losing electrons, leaving H+ in the electrolyte aqueous solution; or the anode comprises pseudocapacitance material, and in operation of the pH adjustor, the pseudocapacitance material loses electrons and adsorbs anions from the electrolyte aqueous solution by electrochemically reacting with said anions, H+ in the electrolyte aqueous solution are consumed at the cathode by getting electrons, leaving OH- in the electrolyte aqueous solution.

The pH adjustor further comprises a controller to control the electrolysis process in the electrolysis cell.

Hereinafter, tap water is taken as an example of the electrolyte aqueous solution. It should be appreciated that, however, other electrolyte aqueous solutions such as distilled water, saline aqueous solutions or any other aqueous solution suitable for embodiments of the invention can also be used for the purpose described herein. For example, as will be further described, water containing very limited ions such as distilled water is still workable electrolyte aqueous solutions according to some embodiments of the invention.

In an embodiment, the pseudocapacitance material may comprise transition metal oxide (TMO). In case the TMO) is comprised in a cathode, in operation of the pH adjustor, a pseudo-faradic reaction at the cathode whereby an oxidation status of the transition metal is lowered, together with absorption of cations into the lattice of the TMO. At or near the anode, OH⁻ lose electrons (i.e., be oxidized) to produce H₂O and O₂ (see expression (2)). Referring to the reactions in expressions (1) and (2) as symmetrical electrolysis, the foregoing in this paragraph can be referred to as asymmetrical electrolysis, enabled by incorporating TMO in an electrode. Therefore H⁺ are not consumed as expression (1) but left in the water, the pH value of the solution gets decreased accordingly.

In another embodiment, in case the TMO is comprised in an anode, in operation of the pH adjustor, a pseudo-faradic reaction takes place at the anode whereby an oxidation status of the transition metal is increased. The anode loses electrons, and anions in the solution are absorbed by the TMO. H⁺ in the water are consumed by getting the electrons at the cathode (see expression (1)). OH- in the water are not consumed at the anode as expression (2) but left in the water, the pH value of the solution gest increased accordingly.

According to an embodiment of the invention, the electrolyte aqueous solution is tap water. When incorporated in a shower fitting, a baby basin, an atomizer (e.g., a portable one), a sanitary fitting, or any other device suitable for having a unidirectional pH adjustor, the pH adjustor can process tap water, in order to have pH adjusted water. The pH adjusted water is, in an embodiment, weak acidic which would be advantageous for skin care, especially for baby skin barrier function recovery, which will be further described hereinafter. Any or any combination of Na⁺, Mg²⁺, Ca²⁺ and K⁺ which exist in the tap water can be embodiment of the cations adsorbed by the TMO.

In an embodiment, the pH adjustor further comprises a first unit configured to obtain information relating to a pH value of the water, and the controller is configured to control the electrolysis process according to the obtained information, so as to adjust the pH value of the water to a target pH value.

The first unit can be formed as a pH sensor or a hardness sensor, which provides to the controller, a pH value of the water, e.g., the original pH value and/or instant pH value during electrolysis. In case tap water flows in the pH adjustor and flows out with adjusted pH value, given the flow rate and the original pH value of the water (generally tap water has a stable pH over time), the controller may adjust the pH value of the water to a target pH value by controlling a current or a voltage applied to the pair of electrodes. If water is poured/injected into a container and is kept in the container in a relatively static status until the pH adjustment is finished, then given the amount and original pH value of the water kept in the container, the target pH value can be achieved by controlling one or more of the following: electrolysis time (duration), a current or voltage applied to the electrode pair, or any other parameters suitable of effecting the electrolysis.

In an embodiment, the obtained information relating to the pH value of the water may include a user input indicating an original pH value of the water. The first unit can be a user interface such as a keypad, a touch screen, an audio receiver, a camera or any other element that is suitable for receiving a user input. It would be appreciated that the user input may be an exact pH value, e.g., 7.5, or other info based on which the pH value of the feed water can be derived by the pH adjustor. For example, user may input the type of water such as tap water, then the first unit determines the original pH value of the feed water based on historical data, e.g., an empirical value of pH value of tap water. User may further input a geographic location as additional input to the pH adjustor, thereby the pH adjustor can determine the pH value of the feed water based on empirical pH value of tap water in that particular area indicated by the location.

Therefore, as long as the user knows the pH value of feed water, or pH value of feed water is stable over time, the pH adjustor is able to obtain the original pH value of feed water without having a pH detector or so. This might be beneficial in case pH detector is not preferred for cost or compactness concerns.

In an embodiment of the invention, the TMO is coated on a substrate or doped in a substrate. The substrate can be metal or metal oxide, e.g., Ti or Ti MMO (mixed metal oxide), stainless steel, carbon materials (e.g., carbon plate, carbon paper), silicon-based materials (e.g., glassy carbon material).

In some cases, a coating of TMO such as MnO₂ onto a substrate of an electrode may be advantageous for the electrolysis. A role MnO₂ plays in the electrode is to break the balance between normal water electrolysis reactions by a charging/discharging process, in another word, MnO₂ aims at asymmetric electrolysis to change the pH value. As long as there is MnO₂ on the electrode, the pH value of the solution will change during the electrolysis process in theory. The real pH adjustment performance can be optimized by integrating a proper amount of MnO₂.

In an embodiment, the TMO fulfils the following reaction,

TMO +A⁺+e⁻⇄TMO⁻A⁺ (3)

where TMO stands for the transition metal oxide in the electrode, A⁺ stands for cations adsorbed and is not limited to monovalent cations such as H⁺, Na⁺ or K⁺, but can also cover Mg²⁺, Ca², Fe²⁺ or any other cations in the water. e⁻ stands for electrons the TMO gets from the anode.

Alternatives to TMO include conjugated conductive polymers (CCP). CCP is either p-doped or n-doped to gain the conductivity and function as Faradic capacitors. The CCP can be charged to get electrons when being used in a cathode, and the reaction of expression (2) at the cathode will be at least partially inhibited and H⁺ therefore accumulates. Or, the CCP can be discharged to lose electrons when being used in an anode, and the reaction of expression (1) at the anode will be at least partially inhibited and OH⁻ therefore accumulates. CCP has a larger specific capacitance than electrical double-layer capacitance (EDLC) material, which means CCP can be charged and discharged with more electricity, leading to a higher capability of pH adjustment.

Examples of CCP include Polypyrrole (PPy). PPy shows relatively high capacitances and could remain stable after a long time's use.

In a further preferred embodiment, the CCP may be carbon doped PPy. In this embodiment, carbon, such as graphene is doped to form a frame containing the PPy, and grapheme modified PPy (GmPPy) is generated. Advantages of this embodiment may include:
- Improved specific capacitance: the framework formed by graphene could help to separate PPy, making a larger part of the PPy accessible for the ions in the solution. Therefore, a larger area of PPy contacts with more ions to have more faradic charge transfer reactions. In this way, more electricity can be released or stored by the faradic charge transfer reactions, and thus, comparing to pure PPy, this GmPPy shows higher specific capacitance.
- Improved electrochemical stability: graphene in the electrode forms framework structures, in which PPy is not able to form an interconnected network inside the bulk electrode matrix. As a result, the swelling and shrinking effect of PPy during charging-discharging cycles, which is believed to be the reason for the instability of PPy electrode, will be relived greatly, leading to an improved electrochemical stability.
- Improved electrical conductivity: adding highly conductive graphene could effectively improve the conductivity of the resulting GmPPy electrodes.

In a further preferred embodiment, said carbon doped PPy is deposited on a porous Ti substrate of said cathode or said anode.

In this embodiment, the porous construction of the electrode increases the contacting area between the PPy and the electrolyte aqueous solution, thereby improving the pH adjustment performance.

Preferably, the electrolysis cell might interchange the electrodes under the control of the controller. By interchanging the electrodes, the following can be achieved:
(a) refreshment of the electrode comprising pseudocapacitance material;
As a supercapacitor, although an electrode comprising pseudocapacitance material has a high capacitance, its highest capacitance can still be reached if being used only for pH adjustment in one single direction, e.g., only for increasing or only for decreasing pH value. Some water can be added to the electrolysis cell to enable the refreshment. In an embodiment, the outlet water could has a pH value higher than 7, and can be used in specific applications which require alkaline circumstance, or alternatively can also be treated as waste water. (b) unidirectional pH adjustment in a revered direction, i.e., pH increment after pH decrement It has been proven that both alkaline water and acidic water has its place in people's daily life or industrial applications. Therefore, it's would be exciting to have the pseudocapacitance material electrode which is at least partially charged during the preparation of acidic water to be used for preparing alkaline water, or vice versa. In an embodiment, the alkaline water can be used for hygiene, cooking, food cleaning, etc., which is meanwhile refreshing the electrode. In some embodiments, the second unit can comprises a nozzle and a tube connecting the nozzle to the pH adjustor which provides pH adjusted water. By incorporating the pH adjustor in different domestic appliances, pH adjustors can be provided to meet different needs. Take baby bathing as instance, as acidic environment is better than alkaline for baby skin barrier function recovery, the device can be formed in a baby basin (further illustrated and described in Detail Description). The baby basin having a water inlet to receive tap water and is connected to the pH adjustor, while the pH adjusted water can be fed into the container via a first water outlet. In addition the baby basin can be provided with a second water for the basin to drain. In other embodiments, the device can be also formed in sanitary appliances. Specifically, the device may comprises a water tank or a port for receiving tap water, the pH adjustor, a tube and a nozzle for spraying water, the device being attached to a sanitary appliance such as a flush toilet. In an embodiment, the device can be formed in a toilet seat for cleansing after the toilet, the water sprayed being weak acidic. In other embodiments, the device can be a desktop atomizer which ladies can use for preserve skin moisture. More applications will be described hereafter.

According to an embodiment of the invention, the second unit dispenses the pH-adjusted water in liquid status such as in a baby basin, shower or sanitary appliance, or vapour status such as in an atomizer, or a combination of liquid status and vapour status.

According to an embodiment of the invention, the device further comprises a temperature adjustor to adjust temperature of the water, such as a heater or a cooler. The temperature can be adjusted after the pH adjustment, in some embodiments. However, it's not strictly required that the heating/cooling must be after the pH adjustment. For baby skin bathing, the temperature can be about 37 °C to about 37.5°C which is most convenient for babies.

In an embodiment of the application, it is further provided a method for adjusting pH value of water. The method includes the following steps: providing an electrolysis cell having a first electrode and a second electrode, wherein the first electrode including pseudocapacitance material;
electrolyzing the water by using the first electrode as a cathode and the second electrode as an anode, wherein the pseudocapacitance gets electrons from the anode and adsorbs cations from the water, OH⁻ in the water are consumed by losing the electrons; or
electrolyzing the electrolyte aqueous solution by using the second electrode as a cathode and the first electrode as an anode, wherein the pseudocapacitance material loses electrons and adsorbs anions from the electrolyte aqueous solution, H⁺ in the electrolyte aqueous solution are consumed by getting the electrons.
Preferably, the pseudocapacitance material comprises transition metal oxide or conjugated conductive polymers that can function as Faradic capacitors by charging and discharging via electrochemical reactions with the ions in the water.

According to an embodiment the method further comprises an interchange step, in which the first electrode is interchanged with the second electrode; and electrolyzing the water by using the first electrode as an anode and the first electrode as a cathode, wherein the transition metal oxide loses electrons and releases cations into the water, H⁺ in the water are consumed by getting the electrons.

According to an embodiment a pH adjustor is configured to adjust pH value. The pH adjustor may comprise an electrolysis cell including an anode and a cathode, said anode comprising pseudocapacitance material, wherein the pseudocapacitance material is at least partially charged and the pseudocapacitance material is provided with additional cations, in operation of the pH adjustor, the pseudocapacitance material loses electrons and releases at least part of said additional cations into the electrolyte aqueous solution, H⁺ in the electrolyte aqueous solution are consumed by getting the electrons, a controller configured to control the electrolysis process in the electrolysis cell.

A partially or fully charged TMO-based electrode is used in an embodiment as the anode, which means losing electrons in the electrolysis. The transition metal is not at its lowest valence status. Alternatively, partially or fully charged conjugated conductive polymers are used in another embodiment as the anode. At and/or near the counter electrode, which is typically made by inert metal or graphite, H⁺ get reduced by getting electrons and produce H₂, leaving OH⁻ in the water and hence increase the pH value of the water.

According to an embodiment the pH adjustor can interchange the anode with the cathode, and therefore the interchanged cathode comprising the pseudocapacitance material, in operation of the pH adjustor, the pseudocapacitance material in the interchanged cathode gets electrons and adsorbs said cations from the water, and OH⁻ in the water are consumed by losing the electrons.

Detailed explanations and other aspects of the invention will be given below.

### BRIEF DESCRIPTION OF THE DRAWINGS

The particular aspects of the invention will now be explained with reference to the embodiments described hereinafter and considered in connection with the accompanying drawings, in which identical parts or sub-steps are designated in the same manner:
Fig. 1 illustrates effect of various single treatments of volar forearm on skin pH;
Fig. 2 illustrates a pH adjustor 1
Fig. 3 illustrates a pH adjustor 3
Fig. 4 illustrates a first unit
Fig. 5 illustrates a device 5 for preparing pH adjusted water according to an embodiment of the invention;
Fig. 6 illustrates an example experimental setup for producing a GmPPy electrode
Fig. 7 schematically illustrates the microstructure of the GmPPy electrode
Figs. 8A and 8B illustrates the electro-chemical properties of the GmPPy electrode
Figs. 9A and 9B illustrates a pH adjustor 9 with the GmPPy electrode respectively as its anode and cathode;
Figs. 10A and 10B illustrate the performance of the pH adjustor 9

### DETAILED DESCRIPTION OF THE INVENTION

As will be appreciated by reading the context, pH adjustors, device for preparing pH adjusted water and method for pH adjustment can be useful for most applications where unidirectional pH adjustment is needed. Among the various applications, baby skin barrier function recovery is typically suitable, which is firstly described as below.

The main role of baby's skin is to provide a barrier which prevents infection, the loss of water from the body, and penetration of irritants and allergens. These functions depend a lot on the maintenance of skin pH balance. Acidic skin pH affects maturation and maintenance of the epidermal permeability barrier by pH-sensitive enzymes that process constituents of the intercellular lipid matrix and pH-sensitive serine proteases activity responsible for corneodesmosome degradation. The increase of the skin pH irritates the physiological protective 'acid mantle', breaks down the skin barrier and changes the composition of the cutaneous bacterial flora.

Babies are born with a skin pH of 6.4 which reduces over three to four days to around 4.9. A baby's skin has a less developed epidermal barrier than adults and thus is more prone to damage. The immaturity of babies' skin creates the potential for a number of skin problems. Increased skin permeability in consequence of irritation may lead to secondary microbial invasion. Once skin barrier disruption has occurred, infant skin is also possibly less able to promote skin repair. These problems emphasize the importance of appropriate skin cleansing routines special for baby.

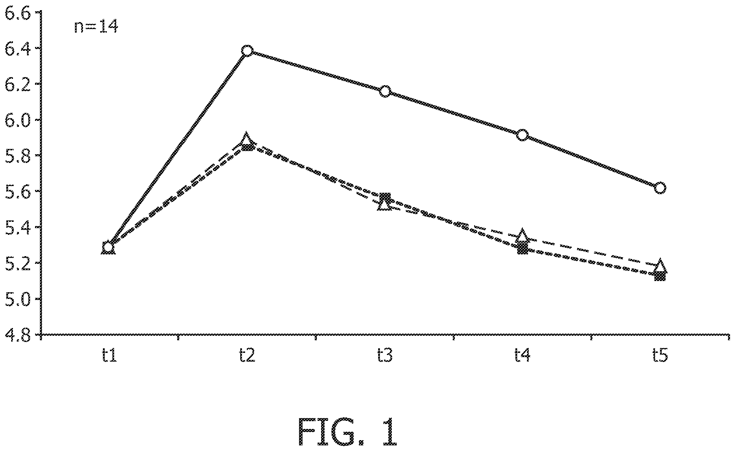

Harsh soap and detergent raise the pH of the skin thereby increasing the protease activity in the skin and potentially leading to severe skin barrier breakdown. Recently, it is found that not only detergent and soaps, have profound influence on skin surface pH, but the use of plain tap water, with a pH value generally around 8.0, will increase skin pH up to 6 h after application before returning to its 'natural' value of on average below 5.0, see Fig. 1, wherein the solid curve with round dots (on top of Fig .1) stands for pH of skin treated by soap, the dash curve with triangles stands for pH of skin treated by only tap water, and the dotted curve with black squares stands for pH of skin treated by shower gel at pH 6.0. Baby will have more frequent cleansing especially in diaper area. Consequently, repeated cleansing will increase the damage to skin, even only use tap water. In Fig. 1, t₁-t₅ respectively indicates the following points in timeline: before washing, immediately after washing, 2 hours after washing, 4 hours after washing and 6 hours after washing.

So after these frequent contacts with alkaline environment such as tap water or soap, skin permeability barrier is disturbed. Exogenous acidification could be used to normalize the permeability barrier homeostasis. According to study, *Effects of CO2-enriched water on barrier recovery, by*Bock M, Schürer NY, Schwanitz HJ., Arch Dermatol Res. 2004 Sep;296(4):163-8, comparing with normal tap water (e.g., pH=7.9), the conditioned tap water (pH 5.4) could accelerate the barrier recovery of detergent-damaged skin. Cumulative irritation with 1% SLS (Sodium LaurethSulfate) over 2*24 h led to eczematous skin reactions, the side treated with tap water (pH=7.9) showed erythema, papules and infiltration, whereas the side treated with pH-adjusted water (pH=5.4) showed only a discrete post-inflammatory hyperpigmentation and lichenification. It also has been found that TEWL (trans-epidermis water loss, indicator of status of the skin barrier function) was significantly (P<0.01, P standing for the probability of obtaining a test statistic at least as extreme as the one that was actually observed, assuming that the null hypothesis is true.) lower in skin treated with pH adjusted tap water than in skin treated with normal tap water. These findings support that rinsing with acid water could enhances barrier repair after detergent-induced perturbation.

Although the frequency and the severity of diaper rash are declining, mainly because of the development of modern, superabsorbent diapers, and high quality baby wipes, this skin condition is still present and affects a certain percentage of infant populations. It has been reported that concomitant exposure of skin to urine and feces in the diaper area leads to increased skin pH levels as a result of the formation of ammonia. This effect is sufficient to activate proteolytic and lipolytic enzymes in feces, which impact the integral structure and barrier status of the stratum corneum. In addition, the anatomic shape of the diaper area contains folds and creases that not only are prone to soil residuals, but also are occlusive and a site of minor barrier damage from friction. This further contributes to increased pH levels and microbiological activity. Therefore, efficient control of baby skin pH in the diaper area may be expected to improve skin condition. For diaper area, although baby wipes has been widely used, it contains a lot of chemical ingredients, such as antiseptic, preservatives and perfumes. The additives have aroused a lot of concerns for baby care. It's not nature and safe enough. For baby care, the simple is the best. And wipe is not efficient to clean excretion. Water is still the effective choice.

However, tap water (weak alkaline) alone and soap/detergent (alkaline) both did not maintain the skin pH at a physiologic level (pH 4.5-6) after cleaning. The physiological characteristic of babies make them suffer from repeat and frequent skin cleansing, thus will impede the baby skin pH recovery and further deteriorate skin barrier function. Frequently cleansing with tap water, say nothing of soaps/detergents, will impede the skin pH balance recovery hence damage skin barrier function. A new way to generate acid water will benefit a lot to daily baby cleansing. Therefore, the inventors found that there is a need for unidirectional pH adjustment for baby skin care. In addition, adult skin barrier is also suffering a similar situation and also requires unidirectional pH adjustment. Further, a similar need is also found for cooking, brewing, shaving, food cleaning, etc.,

Hereinafter reference will be made to pH adjustors according to embodiments of the application. Without loss of generality, preparation of acidic water based on tap water for baby skin care will be taken as primary examples. It should be appreciated by those skilled in the art that the described structure, workflow can be applied in other applications without or with slight changes, which are still in the scope of the appended claims. Tap water is, however, not the only type of subject matter that can be processed according to the present invention. According to experiments for water with ultra-low electrical conductivity (EC), pH of distilled drinking water (e.g., Ice Dew), which has an EC of only about 30 us/cm, could be adjusted by the pH adjustor through electrolysis. In these low-EC situations, although the current is small, the low carbonate hardness could compensate this point. Specifically, for low conductivity water, the pH range is limited. Theoretically, for water with an EC = about 30 us/cm, the lowest pH that can achieve is around 5.5. The efficiency will be affected by the low ion concentration in water. However, the extremely low carbonate hardness will help the realization of pH change. In a reasonable time, the pH of the low EC aqueous solution will have change, although may not reach the lowest value.

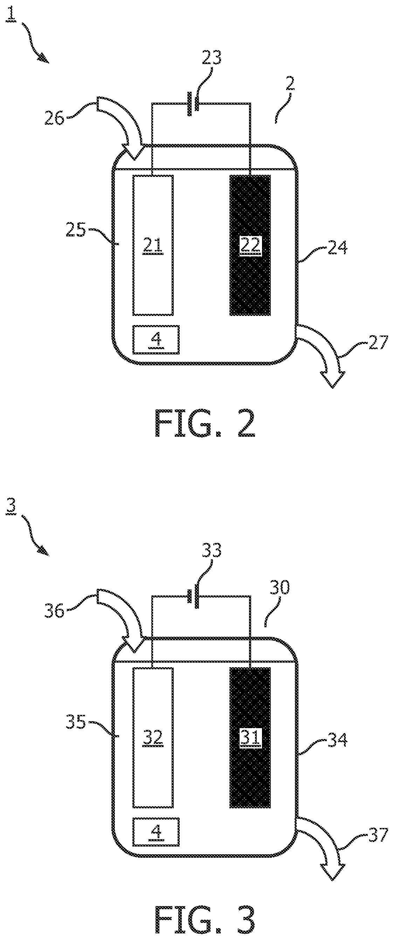

Fig. 2 illustrates a pH adjustor according to an embodiment of the present application aim at providing any least one of the following advantageous:
1) to adjust pH value (hereinafter also referred to pH) to a target value such as about 3 to about 6 thus maintain skin pH at a physiologic level, e.g., about 4.5 to about 6. Effective cleaning also contributes to the maintenance of pH balance by preventing residual excreta to remain on the skin.
2) to speed up the recovery of skin barrier in frequent baby skin cleansing.
3) to adjust pH of water without a lot of waste water as side products.

Referring to Fig. 2, in this embodiment, the pH adjustor 1 comprises an electrolysis cell 2, including an anode 21, a cathode 22 and a DC power supply 23 connected to the electrodes 21 and 22 as illustrated, i.e., anode 21 being connected to positive pole and the cathode 23 being connected to negative pole. The cathode 22 comprises transition metal oxide, transition metal (TM) being usually defined as an element whose atom has an incomplete *d* sub-shell, which provides TM with the characteristic of exhibition two or more oxidation states. For example, Mangansese (Mn) has the oxidation states of +2, +3, +4, +6 and +7, and the transition between different oxidation states is possible.

In an embodiment, the pH adjustor 2 may include a chamber 24 into which feed water 25 is injected or poured, e.g., via an inlet 26. The feed water 25 is thereafter being electrolyzed by the electrolysis cell 2, leading to a decrease of pH of water 25. pH adjusted water is released from the pH adjustor 1 for use via a water outlet 27. It should be appreciated the forms or positions of neither inlet 26 nor outlet 27 illustrated in Fig. 2 should be perceived as exclusive, alternatives are possible. As such, the cathode 22 comprises, in an embodiment, transition metal oxide such as MnO₂. Those skilled in the art could appreciate MnO₂ is only taken as an exemplary instance and can be replaced by other TMO such as Fe₂O₃, RuO₂, etc., if needed. The anode 21 can be made from Ti, MMO of Ti, any other inert metal or oxide thereof, or graphite. The cathode 22 can be made from pure MnO₂, by doping MnO₂ in a substrate, or coating the substrate with MnO_{2.} In an embodiment, given that the electric conductivity of an electrode made by pure MnO₂ is not very high, and the EC could be dramatically improved by using a MMO substrate or doping some materials of high EC (e.g., graphite or grapheme, etc.)

When operating pH adjustor 1 by applying the electrolysis cell 2 in Fig. 2 to water 25, pseudo-faradic reaction will take place because the cathode 22 includes TMO, i.e., MnO₂. Specifically, the cathode 22 acts as a supercapacitor. During the electrolysis process, transition metal Mn gets reduced and adsorbs one cation A⁺ from the water 25 into the lattice of MnO₂ to form MnO₂A⁺. Expression (3) is a general expression for scenarios where cations bearing one positive charge are adsorbed, e.g., H⁺, Na⁺, K⁺. In case cationsA'²⁺bearing two positive charge (e.g., Ca²⁺, Mg²⁺) are adsorbed, expression (3) can be further embodied by expression (3a), corresponding to that two MnO₂ get two electrons and adsorbsoneA'²⁺ (e.g., Ca²⁺)into the lattice forming one (MnO₂)₂²⁻A'²⁺:

2MnO₂ + A'²⁺ + 2e⁻⇄ (MnO2)₂²⁻A'²⁺ (3a)

where expression (3a) can be further converted into expression (3b), as an embodiment of expression (3) and ½ A'²⁺ is an embodiment of A in expression (3):

MnO₂ + ½ A'²⁺ + e⁻⇄MnO₂⁻ (½ A'²⁺) (3b)

For cations A"³⁺, a similar expression can be deduced wherein ⅓ A"³⁺ is an embodiment of A in expression (3).

As will be described, the oxidation of MnO₂A to MnO₂ only happens when the polarity of the electrolysis cell 2 is reversed. Wherein, A⁺ stands for all kinds of cations in water25, whichcouldbe H⁺, Na⁺, K⁺, or even Ca²⁺, Mg²⁺. The possibility of these ions being adsorbed by MnO₂ is determined by the original concentrations of the cations in feed water. As indicated by expression (3), on one hand, if all the A⁺are H⁺, the pH of water (25) will not change. On the other hand, if none of A⁺is H⁺, therewillbe a maximum pH change. The real situation isusuallyin-between, and the concentration of H⁺ produced could be calculated by the following, where [ ] is an operator standing for concentration:

[H⁺] = [A⁺](all cations) - [A⁺](other cations) (4)

In embodiments of the invention, the absorption of cations into lattices of TMO is not limited to the surface of TMO. Instead, the whole TMO structure can be used for the chemical adsorption, meaning a large capacity is expected for the TMO-included electrode. According to expression (3), MnO₂ gets one electron, lowering the oxidation state of Mn by one, i.e., from +4 to +3, which is different from the reaction shown in expression (1), therefore the normal water electrolysis by the oxidation status change of TM and H⁺ are no longer consumed by being reduced to H₂. Reactions that happens at the cathode 22 is therefore as described by expression (5), which is an embodiment of expression (3):

MnO₂ +A⁺+e⁻⇄MnO₂⁻A⁺ (5)

According to literature, from +4 to +3 is the only possible transition for MnO₂. For other transition metals, the change in oxidation status may be different. The possible transition of oxidation status is closely related to the arrangement of the valence shell electrons.

Similarly to expression (2), by applying the electrolysis cell 2 to water 25, OH⁻ in water 25 get oxidized by losing electrons and forming H2O and O2. Therefore H⁺ begins to accumulate in water 25 and pH of water 25 begins to reduce, resulting in production of acidic water.

As illustrated in Fig. 2, the DC power supply 23 may be controllable and configured to provide the electricity required for electrolysis and the control of the process can be enabled by connecting the DC power supply 23 to a controller (not shown), by which a current flowing in the cell 2 can be controlled. The performance of pH adjustment will depend on:
(a) Electrolysis time: the longer water 25 is in contact with the electrode, the more OH⁻anions or H⁺ cations (depending TMO is included by an anode or cathode) are generated, which means lower or higher pH could be achieved;
(b) Current/voltage: increasing the current/voltage will increase the electron transfer speed between electrodes and the water to increase the generation rate of OH⁻ or H⁺ ions in the water;
(c) Flow rate of water: the larger the flow rate is, the shorter time water will get contacted with the electrode, and the less H⁺ or OH⁻ ions being produced, and vice versa.

Although the context is about unidirectional pH adjustment, the pH adjustor 1 is however, in an embodiment, adjust pH of water in a reversed direction, which is enabled by interchanging the two electrodes in Figs. 2, resulting to a pH adjustor 3 in Fig. 3, comprising an electrolysis cell 30. After the reversal of the polarities of the electrodes, the interchanged anode 31 (used to be a cathode) comprises MnO₂ and the interchanged cathode 32 (used to be an anode) is the counter electrode. In an embodiment, the reversal can be done by changing the polarity of the power supply. Preferably the reversal happens when the cell2 in Fig. 2 has been used for reducing pH of water for some time and therefore MnO₂ in the electrode 22 has been charged at least partially. After injecting/pouring water 35 and applying the electrolysis cell 30 to the water 35, pH of the water 35 can be increased since release A⁺ and lose electrons (see the backward reaction in expression (3)), the electrons being got by H⁺ in water 35, the H⁺ are therefore consumed by being reduced to H₂. In this asymmetric electrolysis, OH⁻ are not consumed but accumulated and therefore pH is increased. In embodiments of the invention, typical timings of making the reversal include: when the MnO₂ in cathode 22 need to be refreshed for further pH adjustment, this can take place according to user manipulation, or regularly conducted by the pH adjustor 1. Another typical timing of making the reversal is, when pH increment of water is needed, for example, for applications where alkaline water is preferred than acidic water. In applications, feed water can be added via water inlet 36 and water released via outlet 37 has a pH value higher than the feed water. Although in Fig. 3 power supply 33 is illustrated as rotating the power supply 23 in Fig. 3, in applications, the interchange of electrodes can be fulfilled by disabling original connections and enabling new connections between poles of the power supply and respective electrodes, which can be realized by those skilled in the art without any inventive efforts. To interchange the electrodes, several methods could be used: 1) to use a chip which is pre-programmed to give positive or negative voltage, 2) use H bridge (http://en.wikipedia.org/wiki/H_bridge).

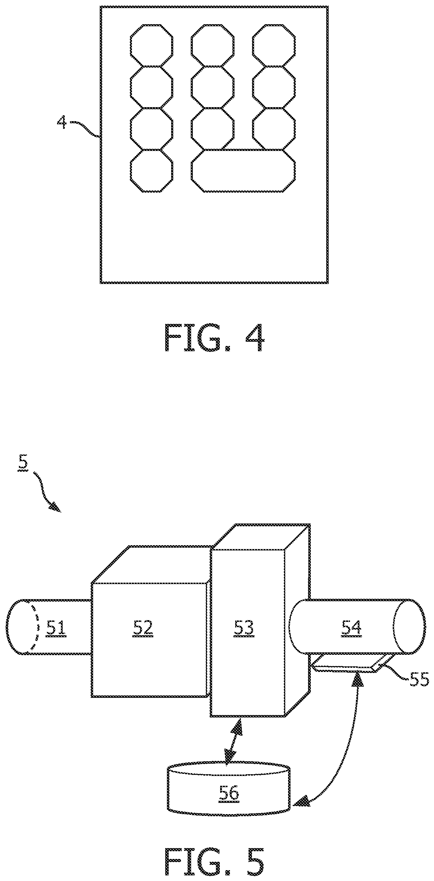

Referring to Fig. 2, in an embodiment, the pH adjustor 1 may further includes a first unit 4 that is provided to obtain information relating to a pH value of the water 3, and the controller is configured to control the electrolysis, e.g., by controlling the electrolysis time, current or voltage provided by the DC power supply 23, according to the obtained information, so as to adjust the pH value of water 3 to a target value, e.g., about 5.5. The first unit 4 can be, as illustrated in Fig. 4, a keypad or a touch screen by which a user can provide user input indicating an original pH value of water 3. In an embodiment, user inputs directly the exact pH value of water 3. In an alternative embodiment, user inputs type of water 3 such that the pH adjustor 1 can determine or estimate the original pH. For example, tap water in a given geography area does not change a lot over time, e.g., usually at 7.8 (weak alkaline). Similarly, distilled water is more neutral and pH of which can be estimated by pH adjustor 1 as, for example, 7. In an embodiment, the pH adjustor 1 has pre-stored a mapping between pH values and types of water, therefore as long as user inputs a valid type of water, a corresponding pH value that indicating the original pH can be retrieved by checking the mapping info.

An alternative of UI 4 is a pH sensor (not illustrated). Existing pH sensors include glass electrode based pH sensor, transition metal oxide based pH sensor, field emission pH sensor, SPR-based pH sensor, etc.. The sensor detects the original pH of water 3 and even the instant pH of water 3 during the electrolysis. By detecting the instant pH during electrolysis, resulting pH of water 3 can be precisely controlled. In that embodiment that a pH sensor is used to detect instant pH of water 3 during the electrolysis, the operation of the pH adjustor 1 can be guided by the detection and hence water 3 can be refreshed if a target pH has been reached if more water needs to be processed, or the operation of pH adjustor 1 can be stopped after releasing the pH adjusted water 3 if no more water need to be processed.

In an embodiment, pH of pH adjusted water can be controlled even without using a pH sensor mentioned above. In this embodiment, relation curves or so have been stored in the pH sensor (e.g., in a memory or a processor which is not shown), the relation curves indicating the relations between different parameters, such as flow rate of feed water, current/voltage applied by the electrodes 21 and 22, original pH of feed water, amount of water (if treated statically instead of running water with a given flow rate), electrolysis time.

In an embodiment, the device has stored some standard calibration curves for the relationship between pH value and flow rate under the same applied voltage with various water total hardness (e.g., 0, 5, 10, 20odH, etc.) and carbonate hardness (e.g., 5, 10 20okH, etc.). Before the user could use the machine for the production of water with desired pH, a test of the hardness and the carbonate hardness of feed water is required, and the device could use the practical data to find the suitable calibration curve, from which it changes the flow rate to realize the pH control. Therefore, given the flow rate of water (by a flow rate meter or user input), amount of water (by weighting or through user input) and original pH of water 3 are known to the pH adjustor 1, a proper processing time, current/voltage can be determined by checking the curves with the known parameters. An exemplary process of making a curve is described in Experimental Results. In embodiments of the invention, the curves can be obtained by manufactures and preloaded into pH adjustors so end users would not bother to do that.

In an embodiment user input can also include geographic location of the device, which can be alternatively determined if the pH adjustor or a device communicating with the pH adjustor if a positioning function is enabled therein. And geographic can sometimes link to water property, especially for tap water, include original pH, and therefore original pH of water 3 can be estimated/determined by the first unit 4 based on the user inputs.
In some more advanced embodiments, pH adjustor 1 can be connected to an intranet or the Internet where a more precise original pH of water 3 can be obtained from professional data sources such as water works, in that case the first unit 4 may include a communication unit that is able to communicate to a network device in user's home or office, such as a gateway or a router. Fig. 5 illustrates a device for preparing pH adjusted water according to an embodiment of the invention. In an embodiment, the device 5 comprises a pH adjustor, e.g., as illustrated in Fig. 2 and a second unit 51 in liquid connection with a pH adjustor and configured to dispense the pH-adjusted water. Those skilled in the art understand that, in different cases, examples illustrated in Fig. 2 or Fig. 3 could be employed in the device 5 for pH adjustment. Generally, the device 5 is provided with a water inlet 51, a water tank 52, a pH adjustor 53, a water outlet 54, a temperature adjustor 55 and a controller 56. The controller 56 is in communication connection with the temperature adjustor 55 and the pH adjustor 53. The water tank 52, in an embodiment, can be used as a chamber for the pH adjustor 53 in which the electrolysis process is performed. The temperature adjustor 55 is in thermal conductive connection with the water outlet 54 therefore water can be heated or cooled before dispensing. An aforementioned first unit can be incorporated into the controller 56 or mounted to the device 5 separately. It should be appreciated that Fig. 5 is an illustrative view of the device 5, and may shows optional elements such as the temperature 55, therefore Fig. 5 shall not be perceived as strictly exclusive, alternatives are possible.

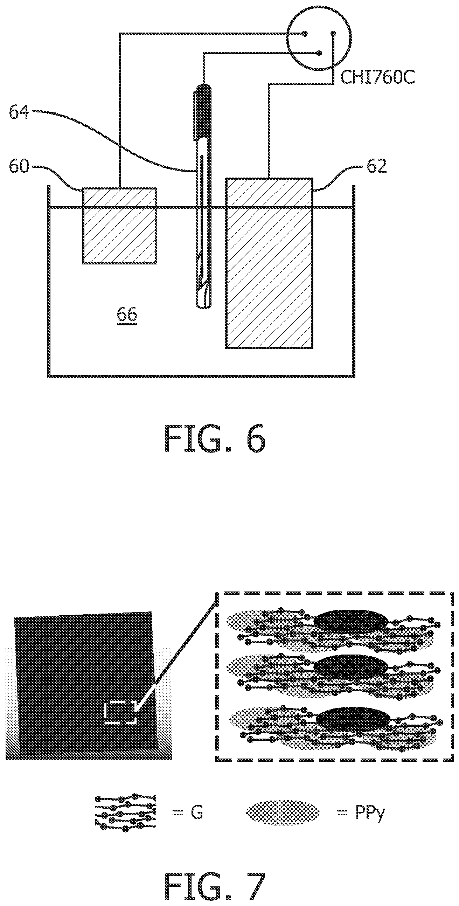

In the above embodiments, the transition metal oxide is used as an example of the pseudocapacitance material to provide supercapacitance for the cathode or anode, so as to inhibit water electrolysis at one of the two electrodes. In an alternative embodiment, conjugated conductive polymers can be used to replace the transition metal oxide. The following description will elucidate this alternative embodiment.
Conjugated conductive polymers (CCPs) are organic polymers which are capable of conducting electricity due to the presence of π-conjugated backbone chains. Polypyrrole (PPy) is one of the most commonly used CCPs in the recent few decades. PPy could be either p-doped or n-doped to gain the conductivity and function as Faradic capacitors. The principle of the charging and discharging of PPy is also based on electrochemical reaction with the ions, which is similar as that of the TMO. The details of conjugated conductive polymer are well known for those skilled in the art, thus are not described further.
To increase the specific capacitance and stability, in a preferred embodiment, carbon is doped into the Polypyrrole. For example, grapheme is used for modifying the Polypyrrole. The following embodiment gives one solution of producing the grapheme-modified Polypyrrole (GmPPy for short).
GmPPy electrodes can be prepared through a facile one-step *in-situ* electro-deposition of PPy and graphene onto a substrate using cyclic voltammetry (CV). The substrate is preferablly a porous Ti substrate to improve the stability of the electrode and increase the contacting between the electrode and the electrolyte aqueous solution. The experimental setup was shown in Fig. 6. A three-electrode system was used for the fabrication, in which the porous Ti plate was used as working electrode 60, a normal Ti electrode was used as counter electrode 62 and a saturated calomel electrode (SCE) was used as reference electrode 64. An aqueous suspension 66 containing graphene powder, pyrrole monomer and doping anion (e.g., H₂SO₄) was used, and a CHI 760C autolab was used to provide the electricity for the CV electro-deposition. It needs to be noted that the above experimental setup is just a example, those skilled in the art would design other industrilized solution of producing the GmPPy electrode.

And fig. 7 depicts an schematic illustration of the microstructure of GmPPy, wherein G stands for the mesh frame formed by the graphene, and the shaded part stands for the PPy.

The following experiment will elucidate the electro-chemical properties of GmPPy electrode. As described above and illustrated in fig. 6, GmPPy electrode was synthesized via *in-situ* electro-deposition of pyrrole (Py) and graphene onto porous Ti plate using cyclic voltammetry (CV). The scan rate was set at 250 mV/s, the voltage range was 0∼1.25 V, and 200 cycles were repeated for the fabrication. Three different GmPPy electrodes with PPy percentage of 28%, 49% and 66% (in weight) were prepared (the ratio was determined by the starting ratio of Py to grapheme in the solvent).

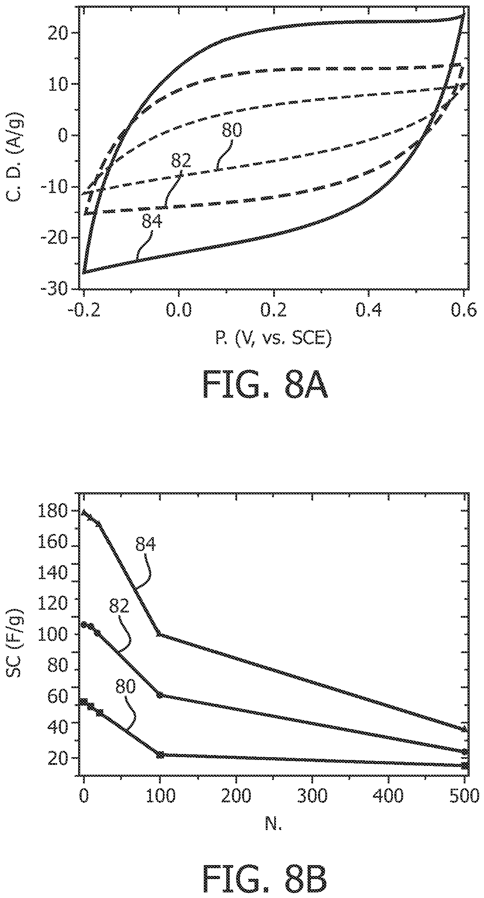

The electro-chemical properties of the GmPPy electrode were measured by CV using a scan rate of 100 mV/s. As shown in Fig. 8A, P. stands for the potential, and C.D. stands for current density. 80 denotes 28% PPy, 82 stands for 49% PPy and 84 stands for 66% PPy. The specific capacitance of the GmPPy electrode was calculated by integrating the area surrounded by the CV curve. The measurement result indicates that the specific capacitances (SCs) of the GmPPy electrode were 57 F/g for 28% PPy, 107 for 49% PPy and 178 F/g for 66% PPy. In our previous experiment, pure PPy electrode has been prepared, and the SC was calculated to be around 15 F/g, which indicates an improved SC (5 to 10 times larger) of GmPPy electrode compared to pure PPy electrode.

The electrochemical stability was estimated by comparing the SC after 100 charging-discharging cycles as shown in Fig. 8B. N. stands for number of cycles, and SC stands for specific capacitance. As indicated by the experimental results, GmPPy electrode could retain around 50% of its original SC measured in the first cycle. Specifically, GmPPy with a PPy ratio of 28% retained 40.2% of the original SC, GmPPy with a PPy ratio of 48% retained 57.2% and GmPPy with a PPy ratio of 66% retained 56.5%. Compred to pure PPy electrode, which retained less than 40% of its original SC in our test under the same measurement condition, GmPPy electrodes with various graphene ratios have relatively better performance in long-term stability. After 500 cycles, GmPPy electrodes could still retain around 30% original SC. This indicates that the electro-chemical stability could be improved with the modification of graphene in GmPPy electrodes.

To sum up, compared to pure PPy electrode, GmPPy has several advantages by the presence of graphene frame:
- Improved specific capacitance: the frame formed by graphene could help to separate PPy, making a larger ratio of PPy accessible for the ions in solution. This effective electrolyte transport from solution to active sites for enhanced faradic charge transfer reactions will lead to a higher specific capacitance of GmPPy compared to pure PPy.
- Improved electrochemical stability: graphene part in the electrode will form frame structures, in which PPy is not able to form an interconnected network inside the bulk electrode matrix. As a result, the swelling and shrinking effect of PPy during charging-discharging cycles, which is believed to be the reason for the instability of PPy electrode, will be relived greatly, leading to an improved electrochemical stability.
- Improved electrical conductivity: adding highly conductive graphene could effectively improve the conductivity of the resulting GmPPy electrodes.

As a result, the synergistic effect of graphene and PPy makes GmPPy electrode suitable for long-term supercapacitors in pH adjustment applications.

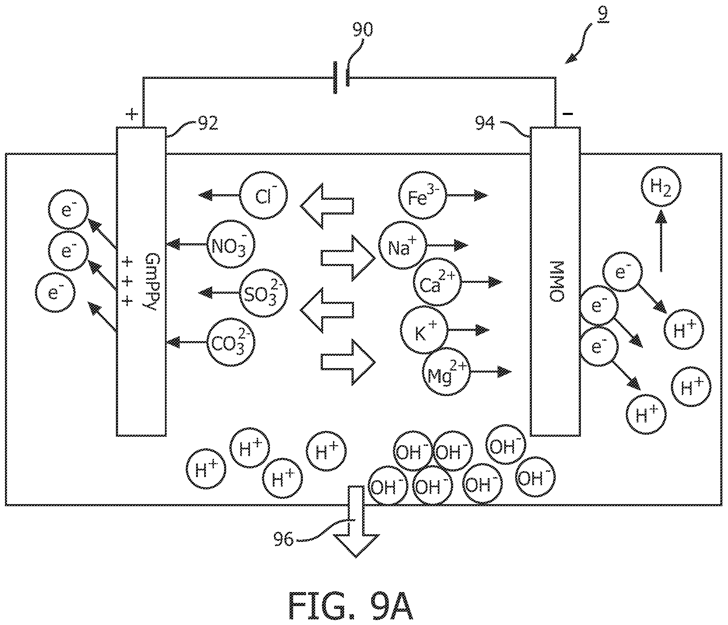

Fig. 9A shows a schematic structure of the pH adjuster 9 using the GmPPy as the anode. A DC power supplier 90 is used to provide the required electricity for pH adjuster. The anode 92 has GmPPy material, and the cathode 94 has MMO material. During the electrolysis process, GmPPy will be discharged due to its supercapacitor property by losing electrons. At the same time, anion in the solution will be absorbed by the GmPPy anode 92. By doing so, the redox reaction that consumes OH- will be inhibited at the GmPPy anode 92. At the cathode 94, redox reaction that consumes H⁺ still occurs, and hydrogen H₂ is generated. Therefore, the embodiment breaks the original balance between H⁺ and OH⁻, leading to the pH increase and alkaline water 96. In this case, the GmPPy is at least partially charged in advance.

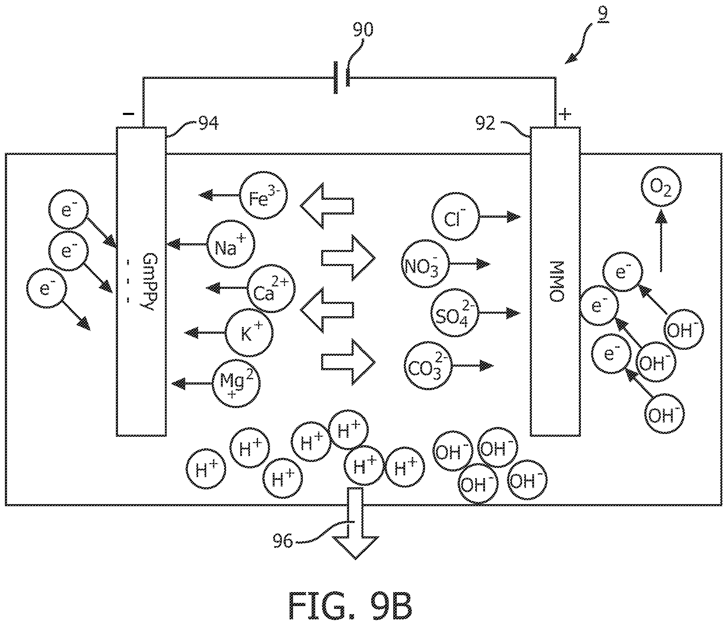

Fig. 9B shows a schematic structure of the pH adjuster 9 using the GmPPy as the cathode. The DC power supplier 90 is used to provide the required electricity for pH adjuster. The anode 92 has MMO material, and the cathode 94 has GmPPy material. During the electrolysis process, GmPPy will be charged due to its supercapacitor property by getting electrons. At the same time, cation in the solution will be absorbed by the GmPPy cathode 94. By doing so, the redox reaction that consumes H⁺ will be inhibited at the GmPPy cathode 94. At the anode 92, redox reaction that consumes OH⁻ still occurs, and Oxygen O₂ is generated. This embodiment breaks the original balance between H⁺ and OH⁻, leading to the pH decrease and acidic water 98. In this case, the GmPPy is at most partially charged in advance.

Similar as the above embodiment, the adjuster 9 can be configured such that the cathode and the anode are interchangable, such that the pseudocapacitance material can be used as any one of the cathode and the anode according to whether the pH of the solution needs to be decreased or increased.

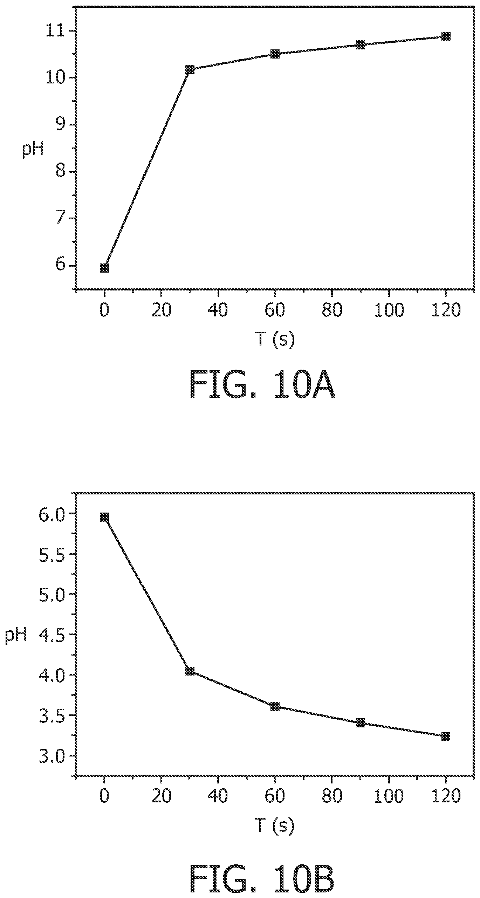

To test the pH adjustment ability of GmPPy electrode, GmPPy electrode (49% PPy) is used as one electrode, together with MMO as another electrode, in electrolyzing Na₂SO₄ aqueous solution (EC = 520 µs/cm). The total volume of electrolyte solution was 150 mL and the voltage applied for the electrolysis was 30 V. The results of GmPPy as anode and as cathode are respectively shown in Fig. 10A and 10B and in the following Table 1.

**Table 1**

| Electrolyzing time (s) | GmPPy@porous Ti plate as anode | GmPPy@porous Ti plate as cathode |
|---|---|---|
| 0 | 5.92 | 5.92 |
| 30 | 10.14 | 4.06 |
| 60 | 10.48 | 3.61 |
| 90 | 10.68 | 3.36 |
| 120 | 10.81 | 3.22 |

According to the practical requirement of pH adjustment, the controller may determine the following parameters for electrolyzing:
- Electrolysis time - the longer the liquid is in contact with the electrode, the more OH⁻ anions or H⁺ cations are generated, meaning lower or higher pH could be achieved;
- Current/voltage - increasing the current/voltage will increase the electron transfer speed between electrodes and solution to increase the generation rate of OH⁻ or H⁺ ions.

Additionally, the following characteristic of the pH adjuster can influence the performance of electrolysis, and these characteristic should be considered in designing the pH adjuster:
- Conductivity of the electrode material - higher EC of the electrode will increases the generation rate of OH- or H⁺ ions, and vice versa;
- Surface area of the electrode - increased surface area of the electrode will enhance the generation rate of OH- or H⁺ ions, and vice versa;

Further, the feed water properties can also influence the performance of the pH adjuster. Feed water with high carbonate hardness will have larger buffer effect, namely reacting with the generated H⁺ or OH⁻, and leading to a smaller pH value change; feed water with low carbonate hardness will have less buffer effect, leading to a larger pH value change. Therefore, in the pH adjuster, the electrolysis time, current/voltage, conductivity of the electrode and surface area of the electrode could be further optimized according to the carbonate hardness of the water in the target market region/country. Alternatively, the pH adjuster further comprises a detector for detecting the hardness of feed water, and the controller controls the electrolysis time and current/voltage according to the detected hardness.

As further described, the device 5 can be embodied as various embodiments below.

### Embodiment 1

### Desktop atomizer

Desktop atomizers are widely used especially by office ladies who are working all day long in air conditioning environment. They use atomizers for daily skin care such as water replenishment. In this embodiment, a compact desktop atomizer can be provided with a pH adjustor aforementioned. Comparing to one-off bottles, the desktop atomizer in which water can be refreshed can be more cost effective. And the second unit is embodied by the nozzle or the sprayer which dispense the pH adjusted water to user's face, hand or arms by pressurizing. In this embodiment, pH adjusted water is dispensed in vapor status.

### Embodiment 2

Baby basins are currently used by injecting/pouring water with a separated nozzle generally used for daily showering. In this embodiment, the baby basin embodies the device for preparing pH adjusted water. Specifically, an aforementioned pH adjustor is incorporated into the baby basin and a water outlet is open to the inside of the basin via which pH adjusted water can be forced into or flow into the basin. In addition, for baby's convenient, the baby basin can be further provided with a temperature adjustor to adjust the pH of the water, e.g., after the pH adjustment. An alternative of this embodiment is a washbasin people usually have in a restroom.

### Embodiment 3

In this embodiment, a shower comprising a nozzle and a tube connecting the nozzle to a water tank or water tap can be provided. The pH adjustor is in fluid connection with the tube and the water tank or water tap. In an embodiment, this shower can be embodied as a diaper area cleaner, which provides acidic water specifically for cleaning baby's diaper area. As more and more parents tends to do diaper area cleaning with tap water, the pH reduced water provided by the cleaner can be better in helping the baby skin barrier function recovery.

### Embodiment 4

In this embodiment, the device is embodied by sanitary fittings, such as a toilet seat and the pH adjustor is provided between a water inlet and water outlet therein. After toilet, water can be dispensed to clean and the damage to skin barrier function by washing is reduced by decreasing the pH of water beforehand.

### Embodiment 5

In this embodiment, an embodiment of the device 5 is used for processing baby tissue. In case parents purchase some baby tissues a pH value of which is not preferred (e.g., weak alkaline), pH adjusted water can be sprayed or dropped on the tissue by a device 5 such as a sprayer. Alternatively, pH adjusted water prepared by other type of device 5 can be poured or injected into a basin and the tissue can be immersed therein shortly to get pH environment on the tissue changed.

### Embodiment 6

One of the causes of sensitive skin is weak skin barrier function. A higher permeability will make the irritant easier to penetrate to lower layer of skin. Sensitivity skin is a very important topic in skin care as a big section of Asian women will complain skin sensitivity. The acid water will benefit to the skin barrier key enzymes, lipid processing, barrier integrity and microorganism.

### Embodiment 7

Shaving might cause skin dryness, flaking, irritation and sometimes micro-wound. Acid water might helpful for balance of microorganism in skin surface that avoid infection due to micro-wound, disturbed skin microbial circumstance and restore skin barrier pH gradient which might lost due to harsh shaving. In application, the device 5 can be embodied as an atomizer or so as pH adjusted water can be dispensed to shaving area for those purposes.

### Experimental Results

In an embodiment, Manganese dioxide (MnO₂) was made into electrode on a Titanium (mesh, used as electric conductor) support for the pH adjusting experiment. The results indicated that Titanium coated by MnO₂ is effective in adjusting pH value during electrolysis as cathode, leading to the production of acidic water with a pH as low as 3.16. According to the literature report, the capacitance of MnO₂ can be as large as500F/g, so 1 gram of this polymer can generate 51 L water at pH=3 under 10 volts charging. For baby skin cleaning application (20 L/day, pH=4.5), 10 gram MnO₂ is able to produce the acidic water for 2 years.

**Table 1: Experimental result**

| Electrolyzing time | pH |
|---|---|
| (min) | (MnO₂ as cathode) |
| 0 | 5.67 |
| 15 | 4.54 |
| 30 | 3.91 |
| 45 | 3.71 |
| 60 | 3.57 |
| 90 | 3.38 |
| 120 | 3.24 |

While the invention has been illustrated and described in detail in the drawings and foregoing description, such illustration are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. For example, in the above embodiment, TMO and conjugated conductive polymers are used as embodiments of the pseudocapacitance material. It should be noted that there are other alternatives, and the term "pseudocapacitance material" in the invention intends to cover any material that can be charged and discharged as Faradic capacitors via electrochemical reactions with ions in electrolyte aqueous solution. In the above embodiment, the MMO electrode is used as the counter electrode of pseudocapacitance material electrode, and alternatively the MMO electrode can be replaced by other inertia material electrodes, such as an inertia metal electrode or a solid carbon electrode.

In the claims, the word "comprising" does not exclude other elements or steps, and the indefinite article "a" or "an" does not exclude a plurality. A single unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A device (5) for preparing pH adjusted electrolyte aqueous solution, comprising:
a pH adjustor (1) configured to prepare pH-adjusted electrolyte aqueous solution;
a second unit (51) in liquid connection with the pH adjustor (1) and configured to dispense the pH-adjusted electrolyte aqueous solution, wherein the pH adjustor (1) comprises:
- an electrolysis cell (2) including an anode (21) and a cathode (22):
said cathode (22) comprising pseudocapacitance material, in operation of the pH adjustor (1), the pseudocapacitance material gets electrons from the anode (21) and adsorbs cations from the electrolyte aqueous solution by electrochemically reacting with said cations, OH⁻ in the electrolyte aqueous solution are consumed by losing electrons, leaving H⁺ in the electrolyte aqueous solution; or
said anode (21) comprises pseudocapacitance material, and in operation of the pH adjustor, the pseudocapacitance material loses electrons and adsorbs anions from the electrolyte aqueous solution by electrochemically reacting with said anions, H⁺ in the electrolyte aqueous solution are consumed at the cathode (22) by getting electrons, leaving OH⁻ in the electrolyte aqueous solution;
- a controller configured to control the electrolysis process in the electrolysis cell (2).

2. The device (5) according to claim 1, wherein the second unit (51) is configured to dispense the pH-adjusted electrolyte aqueous solution in liquid status or vapor status or combination thereof;
wherein, the device (5) further comprise a temperature adjustor (55) configured to adjust temperature of the electrolyte aqueous solution; and
the device (5) comprises any one of the following: baby basin, shower, atomizer or sanitary fittings.

3. The device (5) according to claim 1, wherein the electrolyte aqueous solution is conductive.

4. The device (5) according to claim 1, wherein the electrolysis cell (2) is configured such that the anode (21) and the cathode (22) can be interchanged.

5. The device (5) according to claim 1, wherein the pH adjustor (1) further comprising:
a first unit (4) configured to obtain information relating to a pH value of the electrolyte aqueous solution;
the controller is configured to control the electrolysis process according to the obtained information, so as to adjust the pH value of the electrolyte aqueous solution to a target value.

6. The device (5) according to claim 4, wherein the obtained information includes user input indicating an original pH value of the electrolyte aqueous solution.

7. The device (5) according to claim 1, wherein said pseudocapacitance material comprises transition metal oxide.

8. The device (5) according to claim 1, wherein the transition metal oxide is coated on a substrate or doped in the substrate.

9. The device (5) according to claim 8, wherein the transition metal oxide fulfils the following reaction:
TMO +A⁺+e⁻⇄TMO⁻A⁺
where TMO stands for the transition metal oxide, A⁺ stands for the cations adsorbed, e⁻stands for electrons.

10. The device (5) according to claim 1, wherein said pseudocapacitance material comprises conjugated conductive polymers.

11. The device (5) according to claim 10, wherein said conjugated conductive polymers include carbon doped polypyrrole, and said carbon doped polypyrrole is deposited on a porous Ti substrate of said cathode or said anode.

## Patentansprüche

1. Vorrichtung (5) zur Herstellung einer wässrigen Elektrolytlösung mit reguliertem pH-Wert, umfassend:
einen pH-Wert-Regulierer (1), konfiguriert, um eine wässrige Elektrolytlösung mit reguliertem pH-Wert herzustellen;
eine zweite Einheit (51) in einer Flüssigkeitsverbindung mit dem pH-Wert-Regulierer (1) und konfiguriert, um die wässrige Elektrolytlösung mit reguliertem pH-Wert zu spenden, wobei der pH-Wert-Regulierer (1) umfasst:
- eine Elektrolysezelle (2), die eine Anode (21) und eine Kathode (22) enthält:
wobei die besagte Kathode (22) Material mit Pseudo-Kapazität umfasst, und das Material mit Pseudo-Kapazität beim Betrieb des pH-Wert-Regulierers (1) Elektronen von der Anode (21) erhält und Kationen durch elektrochemische Reaktion mit den besagten Kationen aus der wässrigen Elektrolytlösung absorbiert, OH⁻ in der wässrigen Elektrolytlösung durch den Verlust von Elektronen konsumiert werden, wodurch H⁺ in der wässrigen Elektrolytlösung hinterlassen werden; oder
die besagte Anode (21) Material mit Pseudo-Kapazität umfasst, und das Material mit Pseudo-Kapazität beim Betrieb des pH-Wert-Regulierers Elektronen verliert und Anionen durch elektrochemische Reaktion mit den besagten Anionen aus der wässrigen Elektrolytlösung absorbiert, H⁺ in der wässrigen Elektrolytlösung an der Kathode (22) durch Erhalt von Elektronen konsumiert werden, wodurch OH⁻ in der wässrigen Elektrolytlösung hinterlassen werden;
- eine Steuerung, konfiguriert, um den Elektrolyseprozess in der Elektrolysezelle (2) zu steuern.

2. Vorrichtung (5) nach Anspruch 1, wobei die zweite Einheit (51) konfiguriert ist, um die wässrige Elektrolytlösung mit reguliertem pH-Wert im flüssigen Zustand oder im Dampfzustand oder in einer Kombination davon zu spenden;
wobei die Vorrichtung (5) darüber hinaus einen Temperatur-Regulierer (55) umfasst, konfiguriert, um die Temperatur der wässrigen Elektrolytlösung zu regulieren; und
die Vorrichtung (5) eines umfasst aus: Babymulde, Dusche, Zerstäuber oder Sanitärarmaturen.

3. Vorrichtung (5) nach Anspruch 1, wobei die wässrige Elektrolytlösung leitend ist.

4. Vorrichtung (5) nach Anspruch 1, wobei die Elektrolysezelle (2) konfiguriert ist, sodass die Anode (21) und die Kathode (22) ausgetauscht werden können.

5. Vorrichtung (5) nach Anspruch 1, wobei der pH-Wert-Regulierer (1) darüber hinaus umfasst:
eine erste Einheit (4), konfiguriert, um Informationen in Bezug auf einen pH-Wert der wässrigen Elektrolytlösung zu erhalten;
die Steuerung, die konfiguriert ist, um den Elektrolyseprozess entsprechend der erhaltenen Information zu steuern, um den pH-Wert der wässrigen Elektrolytlösung an einen Zielwert anzupassen.

6. Vorrichtung (5) nach Anspruch 4, wobei die erhaltene Information eine Benutzereingabe enthält, die auf einen ursprünglichen pH-Wert der wässrigen Elektrolytlösung hinweist.

7. Vorrichtung (5) nach Anspruch 1, wobei das besagte Material mit Pseudo-Kapazität Übergangsmetalloxide umfasst.

8. Vorrichtung (5) nach Anspruch 1, wobei das Übergangsmetalloxid auf ein Substrat beschichtet oder in das Substrat dotiert wird.

9. Vorrichtung (5) nach Anspruch 8, wobei das Übergangsmetalloxid die folgende Reaktion erfüllt:
TMO + A⁺ + e⁻ □ TMO⁻A⁺
wobei TMO für das Übergangsmetalloxid steht, A⁺ für die absorbierten Kationen steht, e⁻für Elektronen steht.

10. Vorrichtung (5) nach Anspruch 1, wobei das besagte Material mit Pseudo-Kapazität konjugierte leitende Polymere umfasst.

11. Vorrichtung (5) nach Anspruch 10, wobei die besagten konjugierten leitenden Polymere mit Kohlenstoff dotiertes Polypyrrol enthalten und das besagte mit Kohlenstoff dotierte Polypyrrol auf einem porösen Ti-Substrat der besagten Kathode oder besagten Anode abgeschieden wird.

## Revendications

1. Dispositif (5) de préparation d'une solution aqueuse d'électrolyte à pH ajusté, comprenant :
un ajusteur de pH (1) configuré pour préparer une solution aqueuse d'électrolyte à pH ajusté ;
une seconde unité (51) en connexion liquide avec l'ajusteur de pH (1) et configurée pour dispenser la solution aqueuse d'électrolyte à pH ajusté, dans lequel l'ajusteur de pH (1) comprend :
- une cellule d'électrolyse (2) incluant une anode (21) et une cathode (22) :
ladite cathode (22) comprenant un matériau de pseudo-capacité, en fonctionnement de l'ajusteur de pH (1), le matériau de pseudo-capacité tire des électrons de l'anode (21) et adsorbe des cations de la solution aqueuse d'électrolyte par réaction électrochimique avec lesdits cations, des OH⁻ dans la solution aqueuse d'électrolyte sont consommés par perte d'électrons, laissant des H⁺ dans la solution aqueuse d'électrolyte ; ou
ladite anode (21) comprend un matériau de pseudo-capacité, et en fonctionnement de l'ajusteur de pH, le matériau de pseudo-capacité perd des électrons et adsorbe des anions de la solution aqueuse d'électrolyte par réaction électrochimique avec lesdits anions, les H⁺ dans la solution aqueuse d'électrolyte sont consommés au niveau de la cathode (22) en tirant des électrons, en laissant des OH⁻ dans la solution aqueuse d'électrolyte ;
- une unité de commande configurée pour commander le processus d'électrolyse dans la cellule d'électrolyse (2).

2. Dispositif (5) selon la revendication 1, dans lequel la seconde unité (51) est configurée pour dispenser la solution aqueuse d'électrolyte à pH ajusté dans un état liquide ou un état de vapeur ou l'une de leurs combinaisons ;
dans lequel, le dispositif (5) comprend en outre un ajusteur de température (55) configuré pour ajuster la température de la solution aqueuse d'électrolyte ; et
le dispositif (5) comprend l'un quelconque des éléments suivants : une bassine pour bébé, une douche, un atomiseur ou des appareils sanitaires.

3. Dispositif (5) selon la revendication 1, dans lequel la solution aqueuse d'électrolyte est conductrice.

4. Dispositif (5) selon la revendication 1, dans lequel la cellule d'électrolyse (2) est configurée pour que l'anode (21) et la cathode (22) puissent être interchangées.

5. Dispositif (5) selon la revendication 1, dans lequel l'ajusteur de pH (1) comprenant en outre :
une première unité (4) configurée pour obtenir des informations relatives à une valeur de pH de la solution aqueuse d'électrolyte ;
l'unité de commande est configurée pour commander le processus d'électrolyse selon les informations obtenues, de manière à ajuster la valeur de pH de la solution aqueuse d'électrolyte à une valeur cible.

6. Dispositif (5) selon la revendication 4, dans lequel les informations obtenues incluent une entrée utilisateur indiquant une valeur de pH d'origine de la solution aqueuse d'électrolyte.

7. Dispositif (5) selon la revendication 1, dans lequel ledit matériau de pseudo-capacité comprend un oxyde de métal de transition.

8. Dispositif (5) selon la revendication 1, dans lequel l'oxyde de métal de transition est revêtu sur un substrat ou dopé dans le substrat.

9. Dispositif (5) selon la revendication 8, dans lequel l'oxyde de métal de transition vérifie la réaction suivante :
TMO + A⁺ + e⁻ ⇄ TMO⁻A⁺
où TMO désigne l'oxyde de métal de transition, A⁺ désigne les cations adsorbés, e⁻ désigne les électrons.

10. Dispositif (5) selon la revendication 1, dans lequel ledit matériau de pseudo-capacité comprend des polymères conducteurs conjugués.

11. Dispositif (5) selon la revendication 10, dans lequel lesdits polymères conducteurs conjugués incluent du polypyrrole dopé au carbone, et ledit polypyrrole dopé au carbone est déposé sur un substrat de Ti poreux de ladite cathode ou de ladite anode.
